# EUROPEAN PATENT SPECIFICATION

(11) **EP 2 719 440 B1**
(45) Date of publication and mention of the grant of the patent: **19.04.2017**
(21) Application number: 13166572.1
(22) Date of filing: 05.05.2013
(51) Int. Cl.: B01D 53/56, B01D 53/60, B01D 53/64, B01D 53/73, B01D 53/76, B01D 53/78

(54) **Method for removing contaminants from exhaust gases by adding ozone**
Verfahren zum Entfernen von Verunreinigungen aus Abgasen durch Ozonzugabe
Procédé d'élimination de contaminants à partir de gaz d'échappement par addition d'ozone

(30) Priority: 15.10.2012 US 201261713780 P
(43) Date of publication of application: 16.04.2014
(73) Proprietor: Linde Aktiengesellschaft, 80331 München (DE)
(72) Inventor: Suchak, Naresh J., deceased (US)
(74) Representative: Gellner, Bernd

(56) References cited:
- EP-A1- 1 852 172
- US-A- 6 136 284

## Description

### Technical field of the present invention

The present invention provides for removing contaminants such as nitrogen oxides, sulphur oxides, particulates, heavy metals and other acid gases from gas streams arising from chemical, metallurgical, partial and full combustion processes. The present invention further has utility with exhausts from engines or boilers on mobile sources such as sea going, naval or other vessels.

### Technological background of the present invention

The use of ozone for oxidizing nitrogen oxides is described in US 5,206,002, US 6,162,409, US 6,649,132 B1 and US 7,303,735 B2. These chemistries and techniques are directed towards high levels of nitrogen oxides removal (around ninety percent) and require 1.5 moles of ozone per mole of nitrogen oxide present in the gas stream. Configuring these processes to operate at lower levels of nitrogen oxides removal causes both economic and process challenges.

Combustion and chemical processes generally result in gas streams containing contaminants that need cleanup before being exhausted to the atmosphere.

Many industrial processes, power generating utilities, combustion sources, stationary and mobile sources such as engines, boilers, kilns and the like use solid fuels or low cost hydrocarbon fuels that contain sulphur, chlorine, nitrogen and metal compounds in hydrocarbons which result in exhaust gases that contain contaminants such as acid gases, particulate matter and heavy metals.

To comply with stricter environmental rules mandated by legislation and a greater concern for the environment, combinations of scrubbing (wet or dry) and particulate capture devices such as electrostatic precipitators (ESP), wet ESP and bag house are increasingly preferred for emissions control of acid gas and particulate matters.

Nitrogen oxides found in most combustion exhaust streams are in the form of NO, which is mostly insoluble in water and not very reactive. NO is not removed by most wet or dry scrubber capture devices.

Therefore, to control nitrogen oxides emissions, the two major options are to lower nitrogen oxides formation at the source by modifying combustion or secondly treating nitrogen oxides in the exhaust gas stream using post combustion techniques.

Primary techniques used for reducing nitrogen oxides formation by modifying combustion are low nitrogen oxides burner (LNB), flue gas recirculation (FGR), staged combustion and over fire air (OFA).

Oftentimes, these technologies are not adequate for removing nitrogen oxides from combustion gas streams and post combustion techniques such as selective catalytic reduction (SCR) and selective non-catalytic reduction (SNCR) become necessary to achieve the desired nitrogen oxides reduction.

Both SCR and SNCR processes realize good results but also have limitations. Ozone based oxidation technologies have recently gained success as an alternative post combustion technique, especially when an application is not suitable for SCR.

Ozone based processes as described in US 5,206,002, US 6,162,409 and US 7,303,735 B2 provide multi-pollutant removal approaches and they have been implemented on flue gases that arise from gas and coal fire boilers removing multiple pollutants including nitrogen oxide, sulphur oxides, particulates, etc.

Ozone based processes are also industrially practiced in lowering emissions in other applications such as metal pickling processes, fluidized catalytic cracker (FCC) regenerators, metal recovery furnaces and sulphuric acid manufacture.

The methods disclosed in US 5,206,002, US 6,162,409, US 6,649,132 B1 and US 7,303,735 B2 use chemistry of nitrogen oxides reaction with ozone by forming higher oxides of nitrogen, especially the pentavalent form or higher which are quite water soluble and readily removed by wet scrubbing. The stoichiometric amount of ozone required to convert one mole of NO_{X}, in the form of NO, to the pentavalent form is about 1.5 moles of ozone and 0.5 moles if NO_{X} is in the form of NO₂.

Although various methods described in these patents are effective at achieving ultra low levels of nitrogen oxides emissions in the treated gas stream, they possess economic, regulatory and process challenges when applied to the partial removal of nitrogen oxides.

Coal fired boilers with low nitrogen oxides burners and staged combustion often attain nitrogen oxides in 107.48 kg/TJ to 171.97 kg/TJ (0.25 lb/MMBTU to 0.4 lb/MMBTU, with MMBTU being Million British Thermal Units) cost effectively whereas regulations require nitrogen oxides emissions in a range of 42.99 kg/TJ to 64.49 kg/TJ (0.1 lb/MMBTU to 0.15 lb/MMBTU), i. e. post combustion technology that can cost effectively offer forty percent to seventy percent reduction.

US 6 136 284 relates to a process for removing nitrogen oxides from gas streams such as furnace or utility boiler flue gas streams. An ozone adsorption system is used to adsorb and concentrate ozone. A slip stream containing nitrogen oxides is introduced into an ozone adsorption system to desorb ozone and the ozone-containing slip stream gas is then directed to a reactor duct along with the primary nitrogen oxide-containing gas stream where the nitrogen oxides are converted to N₂O₅.

EP 1 852 172 A1 relates to the removal of contaminants, in particular nitrogen oxides (NO_{X}) but also sulphur oxides (SO_{X}) and mercury (Hg), from a flue gas by reaction with ozone and discloses a pre-scrubbing of the flue gas for SO_{X} removal.

### Disclosure of the present invention: object, solution, advantages

Starting from the disadvantages and shortcomings as described above and taking the prior art as discussed into account, an object of the present invention is to overcome the limitations and problems that are present in earlier processes.

This object is accomplished by a method comprising the features of claim 1. Advantageous embodiments and expedient improvements of the present invention are disclosed in the respective dependent claims.

The present invention provides for a method for partially removing nitrogen oxides from a process gas stream according to claim 1.

Additionally or alternatively, the present invention provides for a method according to the dependent claims 2 to 11.

Advantageously, the process gas stream may be an exhaust gas stream arising from an industrial process, in particular from a chemical, metallurgical, partial or full combustion process and/or from a source selected from the group consisting of fixed sources, stationary sources and mobile sources. Expediently, the industrial process may be selected from the group consisting of industrial boilers, power generation systems, and combustion processes.

Preferably, the nitrogen oxides treated may be selected from the group consisting of nitric oxide and nitrogen dioxide.

Favourably, the scrubbing apparatus may be selected from the group consisting of wet scrubbing equipment. The amount of ozone added to the at least one of the two or more separated gas streams is an amount of greater stoichiometry than the amount of contaminants, in particular of nitrogen oxides, present therein.

The present invention provides for the oxidation of nitrogen oxides and other contaminants by the addition of ozone to a separated portion of the process gas stream. The total process gas or flue gas stream is divided into at least two or more streams. The portion of the total process gas stream that is to be treated with ozone is determined based on the extent of nitrogen oxides removal desired.

For purposes of illustration, to remove sixty percent of the nitrogen oxides from the process gas stream, approximately sixty percent of the gas stream may be mixed with ozone and treated by the methods of the present invention.

Nitrogen oxides generated in combustion processes are mostly in the form of NO which has negligible solubility in water. By adding or admixing ozone to the exhaust gas stream, nitrogen oxides can be oxidized to higher forms. Solubility of nitrogen oxides increases with the degree of oxidation.

Higher oxides such as N₂O₅ and oxyacids are not only very soluble but also highly reactive and they can be removed in dry, semi-dry and wet scrubbing equipment along with other contaminants present in the exhaust gas stream so treated.

Although various methods are effective in achieving ultra low levels of nitrogen oxides emissions, when applied to removing only a portion of the nitrogen oxides present in the exhaust gas stream, they will generate appreciable amounts of NO₂ which is not quantitatively removed in the capture device employed. It is well understood that only when nitrogen oxides are oxidized beyond NO₂ to higher oxides such as N₂O₅, quantitative removal occurs in industrially used capture devices.

Nitrogen oxides oxidation to N₂O₅ involves many reactions but for the sake of brevity, it can be simplified as follows:

NO + O₃ → NO₂ + O₂ (very fast) (1)

NO₂ + O₃ → NO₃ + O₂ (slow) (2)

NO₂ + NO₃ ←→ N₂O₅ (3)

The reaction (1) is an order of magnitude faster when compared to reaction (2). By the time reaction (2) starts to occur, most of the NO is oxidized to form NO₂. Therefore, reactions (1) and (2) are somewhat consecutive reactions.

NO₂ has relatively low solubility in water, so unless the reaction is brought forward to the formation of oxides higher than NO₂, removal of nitrogen oxides in a wet scrubber remains limited. On the other hand, N₂O₅ is extremely soluble and with moisture present in the gas stream forms HNO₃ which is soluble with water in all proportions.

Therefore, any capture device, wet scrubber, wet ESP or any device with wet surfaces such as a condenser or coalescing device such as a mist eliminator will remove HNO₃ and N₂O₅ quantitatively with or without any reagent present in the aqueous phase.

The highly oxidized forms HNO₃ and N₂O₅ are also very reactive and are removed using most common reagents and adsorbents industrially used in dry and semi-dry scrubbing.

The stoichiometric amount of ozone required to convert one mole of NO and NO₂ to pentavalent form namely N₂O₅ and/or HNO₃ is about 1.5 moles and 0.5 moles respectively. In the majority of combustion processes, nitrogen oxides are predominantly in the form of NO. In fact by and large, most nitrogen oxides emitted from various types of sources is in the form NO.

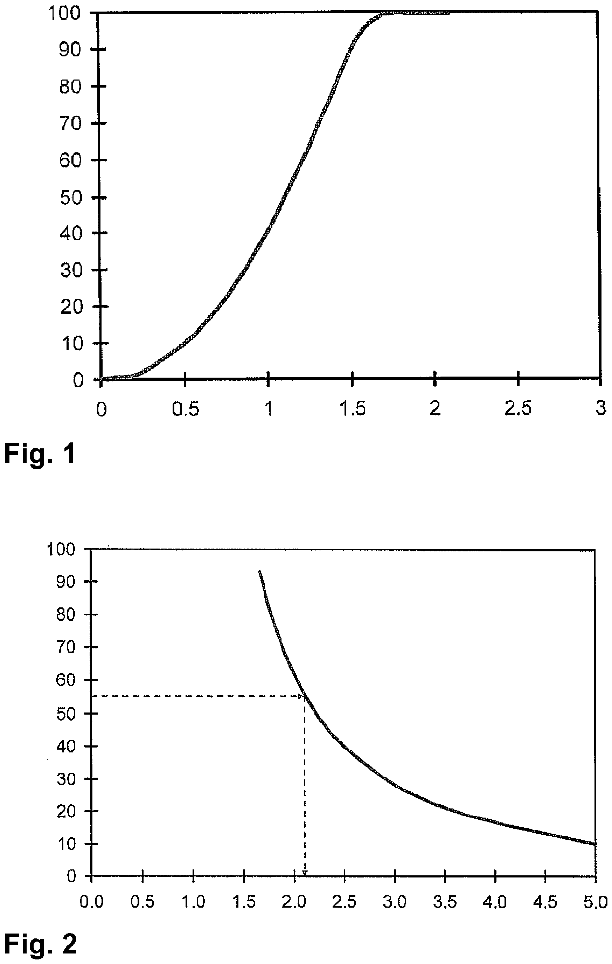

Fig. 1 depicts the removal of nitrogen oxides (NO_{X}) versus the ratio of moles of ozone (O₃) to moles of nitrogen oxides (NO_{X}) in the exhaust gas from a coal fired boiler. The gas flow is 0.45 a[ctual]m³/s (950 acfm, with acfm being actual cubic feet per minute) to 0.47 am³/s (1000 acfm), the NO_{X} level is 250 ppm (parts per million) to 300 ppm, the sulphur oxides (SO_{X}) level is 750 ppm to 800 ppm, and the temperature is 115.6 C to 121.1°C (240°F to 250°F).

This Fig. 1 which appears in US 6,162,409 of like assignment wherewith shows the overall stoichiometric ratio of 1.5 moles of ozone required per mole of nitrogen oxides for greater than ninety percent nitrogen oxides removal with ozone. This ozone requirement is per mole of nitrogen oxides present in the gas stream and not per mole of nitrogen oxides removed.

When only a partial amount of nitrogen oxides reduction is required, ozone required per mole of nitrogen oxides removed far exceeds 1.5. To remove fifty percent of nitrogen oxides (mostly as NO) a series of reactions must occur. When the ozone is added and well mixed in the gas stream, ozone will first react with NO present in the nitrogen oxides to convert to NO₂. Only after almost all of the NO is oxidized does NO₂ oxidation to N₂O₅ begin.

To achieve fifty percent removal with two moles of nitrogen oxides present in the gas stream, one mole of nitrogen oxides need to be removed. For this fifty percent removal example, with two moles of nitrogen oxides in the form of NO, two moles of ozone are required to convert to two moles of NO₂ as per reaction (1). Since NO₂ is only partially soluble, in order to achieve fifty percent removal, one mole out of two moles of NO₂ must be converted to a pentavalent form.

Therefore an additional 0.5 moles of ozone is required to convert one mole of NO₂ to N₂O₅. That makes the total ozone requirement of 2.5 moles per mole of nitrogen oxides removed when the nitrogen oxides targeted removal is only fifty percent.

Referring again to US 6,162,409, the data used in Fig. 1 is plotted in Fig. 2 as nitrogen oxides (NO_{X}) removal versus ratio of moles of ozone (O₃) consumed to moles of nitrogen oxides (NO_{X}) removed on exhaust gas from a coal fired boiler. The gas flow is 0.45 a[ctual]m³/s (950 acfm, with acfm being actual cubic feet per minute), the NO_{X} level is 250 ppm, the SO_{X} level is 750 ppm, and the temperature is 115.6 C (240°F).

Here it is well illustrated that the moles of ozone required per mole of nitrogen oxides removed increases with the decrease in nitrogen oxides removal and for fifty percent nitrogen oxides removal, the ratio of ozone consumed to nitrogen oxides removed was closer to 2.5.

In essence, the nitrogen oxides reactions with ozone and removal by a capture devices was oversimplified in this example but detailed enough to show the limitation of the prior art reference. The partial removal of nitrogen oxides with these earlier processes has limitations which the present invention overcomes.

The merits of a contaminants removal process are evaluated with respect to many attributes of which there are four fundamental ones:
- level of contaminants removal, in particular of nitrogen oxides removal, the process can achieve;
- cost effectiveness, i. e. affordability of the ownership costs in both capital and operating terms per ton of contaminants removed, in particular of nitrogen oxides removed;
- existence of secondary emissions within acceptable limits;
- compatibility of nitrogen oxides removal with removal of other contaminants.

The limitations that the prior art processes fall short in measuring up to are the second and third attributes. Ozone is a costly commodity and the amount of ozone required per unit of nitrogen oxides removal increases rapidly with reduction in nitrogen oxides removal requirement.

Half a century ago, most countries in the world did not have mandatory requirement of reducing nitrogen oxides emissions. As air quality worsened due to increasing air emissions, governmental bodies put in place environmental regulations that mandated the gradual lowering of nitrogen oxides emissions.

In the initial phase of implementation of these regulations, the nitrogen oxides reduction from fixed sources such as industrial boilers, power generation systems, combustion processes as well as mobile sources such as ships, barges, etc. are modest.

The method and process of the prior art uses significantly greater amounts of ozone per unit of nitrogen oxides removed at low or modest nitrogen oxides reduction requirements as it is depicted in Fig. 2 and offer poor cost effectiveness thereby falling short with respect to the second attribute. The method and process of the prior art are directed towards very high nitrogen oxides reduction requirements.

At low or modest nitrogen oxides reduction requirement, the ozone treated gas stream also has significantly higher NO₂ content. NO₂ is brown in color and increases the opacity of the exhaust. The large stationary sources such as fossil fuel or biomass fired boilers or combustion sources have huge exhaust streams and are vulnerable to default on opacity specification by not satisfying the third attribute above.

The rate at which nitrogen oxides and ozone react is dependent on the kinetic rate constant as well as on the concentration of nitrogen oxides and ozone. With a decrease in concentration, the rate of reaction also decreases. As described earlier in the fifty percent nitrogen oxides removal case, 2.5 moles of ozone is required per mole of nitrogen oxides removed.

The reaction (1) is very fast and consumes two moles of ozone leaving only 0.5 moles of ozone for the slower reaction (2). In order to achieve the required oxidation, either the exhaust gas stream processing vessel must be large enough to provide the necessary residence time between NO₂ and ozone or excess ozone must be added which may result in some residual ozone in the treated flue gas that is not consumed in the scrubbing process.

For partial nitrogen oxides removal, per the prior art processes, is achieved at sub stoichiometric ratios of ozone and oxidized stream having a mixture of N₂O₅ and NO₂. Scrubbing removes all N₂O₅ and some NO₂ forming a mixture of nitrite and nitrate of alkali or alkaline earth metals. The presence of nitrite in the scrubber purge is undesired and poses challenges in handling and treating liquid streams in the effluent treatment plant.

When the flue gas also has sulphur oxides present in it, SO₂ absorption produces sulphite in the scrubbing medium. Sulphite is an ozone scavenger and helps to eliminate excess ozone in wet scrubbing devices. NO₂ also reacts with sulphite when it is present in large concentrations and depletes sulphite potentially creating conditions for ozone slip. In lime and limestone based reagents, large concentrations of NO₂ also affects sulphur oxides removal adversely thus not satisfying the fourth attribute.

The amount of the process gas stream that is to be treated for nitrogen oxides removal will be about the same percentage as the amount of nitrogen oxides removal. So for example, if the operator wishes to remove sixty percent of the nitrogen oxides in a flue gas stream, then the operator will treat sixty percent of the total flue gas stream with ozone.

The operator would thereby separate the primary flue gas stream into two or more gas streams where at least one of them totals sixty percent of the total process gas stream by volume. An operator could conceivably treat two streams that total sixty percent of the total (thirty percent and thirty percent) or three or more streams as long as the total percentage of treated streams is approximately equal to the percentage reduction in nitrogen oxides content for the whole process gas stream.

The portion of the gas stream that is oxidized with ozone proceeds along the reactions (1) to (3) summarized above. The amount of ozone is based on the amount of nitrogen oxides in that portion of gas stream. A slight excess of stoichiometric requirement may be added to reduce the reaction time requirement.

Nitrogen oxides in combustion flue gas streams are generally in the form of NO (divalent) and therefore stoichiometric requirement is 1.5 moles of ozone per mole of nitrogen oxides.

However, in case of nitrogen oxides in the gas stream is from chemical or other sources and is a mixture of divalent (NO) and tetravalent (NO₂) forms, the stoichiometric requirement is then 1.5 moles of ozone per mole of divalent form and 0.5 moles of ozone per mole of tetravalent form.

Prior to mixing ozone, all or a portion of the gas stream in which the ozone is to be mixed may be scrubbed, pre-scrubbed, selectively pre-scrubbed, quenched or conditioned as required. With respect to temperature, the optimum condition for oxidations is 4.4°C to 107.2°C (40°F to 225°F) in the gas stream. Preferably, the gas stream may be droplet free or free from excessive mist of the aqueous medium if sulphur oxides are also present in the flue gas stream. Ozone is not added to the balance of the gas stream.

The oxidized contaminants in the ozone treated portion of the stream are removed by contacting with a scrubbing medium in a wet or semi-dry or dry scrubber. The oxidized contaminants, especially nitrogen oxides, are highly soluble and very reactive and therefore may also be removed in the aqueous medium on condensing or coalescing surfaces such as heat exchangers or droplet separators.

Alternatively, they may be captured in fabric filter (bag house), electrostatic precipitator (ESP), wet electrostatic precipitator (WESP), etc. Oxidized nitrogen oxides are converted to oxyacids such as nitric acid and nitrous acid and salt.

The chemistry of this dissolution and stabilization of nitrogen oxides in the form of oxyacids and salts is described below.

N₂O₅ + H₂O → 2 HNO₃ (4)

2 HNO₃ + Ca(OH)₂ → Ca(NO₃)₂ + H₂O (5)

HNO₃ + NaOH → NaNO₃ + H₂O (6)

For treating a portion of the process gas stream with ozone, the existing scrubber and APC (air pollution control) device may be modified simply by portioning the duct and/or scrubber while ensuring the oxidized portion of stream is contacted adequately with a scrubbing medium and contaminants are captured prior to unifying the portion of the stream with the balance of gas stream not treated with ozone.

When the ozone treated portion of the gas stream is reunited with the rest of the gas stream that is untreated, there will be nitrogen oxides present. Small amounts of excess ozone from the treated stream will be instantaneously consumed in the recombined stream by the extremely fast oxidation reaction as stated in equation (1).

Thus, the reunited stream will cease to have any residual ozone. Also, due to excess ozone present in the treated stream, almost all of the nitrogen oxides are oxidized to their pentavalent form and captured quantitatively in the capture device with insignificant amounts of leftover NO₂.

The present invention will also provide the capability of an ozone free stack when high nitrogen oxides removal is desired. For example, for ninety percent nitrogen oxides removal, ten percent of the untreated stream is mixed with ninety percent treated stream and residual ozone from the ninety percent treated stream is destroyed by the untreated nitrogen oxides present in the ten percent gas stream.

The present invention thus provides a method and apparatus for the removal of contaminants such as nitrogen oxides in a relatively safe manner that does not cause secondary emissions and requires less ozone. The present invention further allows for the implementation of nitrogen oxides reduction in phases to match regulations that mandate a drop in nitrogen oxides emissions over time.

Phase 1 might mandate a thirty percent to 35 percent nitrogen oxides reduction, while phase 2 mandates sixty percent to 65 percent reduction and phase 3 requiring a ninety percent to 95 percent reduction. By using the methods of the present invention, these mandated reductions can be reached in a cost effective manner.

The present invention lowers NO₂ emissions in the treated gas stream being exhausted to the atmosphere and the opacity of the plume irrespective of nitrogen oxides reduction required.

The present invention provides a method to eliminate residual ozone in the treated gas stream and thereby inhibit ozone slip. Ozone usage is optimized when partial nitrogen oxides reduction is required.

The present invention realizes the residence time requirement for effective nitrogen oxides oxidation without compromising efficiency and without causing ozone slip. Improved scrubber chemistry will also result retaining sulphur oxides removal efficiency by inhibiting sulfite destruction in the scrubbing medium by NO₂. The methods of the present invention will provide cost effective treatment when a gradual or stage wise implementation of nitrogen oxides abatement is performed.

### Brief description of the drawings

For a more complete understanding of the present inventive embodiment disclosures and as already discussed above, there are several options to embody as well as to improve the teaching of the present invention in an advantageous manner. To this aim, reference may be made to the claims dependent on claim 1; further improvements, features and advantages of the present invention are explained below in more detail with reference to the following description of preferred embodiments by way of non-limiting example and to the appended drawing figures taken in conjunction with the description of the embodiments, of which:
- Fig. 1: is a graph showing the percentage of nitrogen oxides (NO_{X}) removal versus molar ratio of ozone (O₃) to nitrogen oxides (NO_{X});
- Fig. 2: is a graph showing the percentage of nitrogen oxides (NO_{X}) removal versus molar ratio of ozone (O₃) to nitrogen oxides (NO_{X}) removed;
- Fig. 3: is a graph showing the percentage of nitrogen oxides (NO_{X}) removal versus molar ratio of ozone (O₃) to nitrogen oxides (NO_{X}) removed;
- Fig. 4: is a cross-sectional view showing oxidation of nitrogen oxides in a partitioned duct according to the present invention, the duct working according to the method of the present invention;
- Fig. 5: is a cross-sectional view showing removal of nitrogen oxides in a multi-Venturi wet scrubbing apparatus according to the present invention, the apparatus working according to the method of the present invention; and
- Fig. 6: is a cross-sectional view showing removal of nitrogen oxides in a dry scrubbing capture device according to the present invention, the device working according to the method of the present invention.

In the appended drawing figures, like equipment is labelled with the same reference numerals throughout the description of Fig. 1 to Fig. 6.

### Detailed description of the drawings; best way of embodying the present invention

Basically, a method for removing at least a portion of contaminants such as nitrogen oxides from a process gas stream, in particular from an exhaust gas, is proposed. The process gas stream is separated into two or more process gas streams. At least one of the two or more process gas streams is treated first in a scrubber then is contacted with ozone. This stream is then fed to a second scrubber before being released. The portion of process gas stream separated directly correlates to the amount of nitrogen oxides that are desired to be removed from the stream.

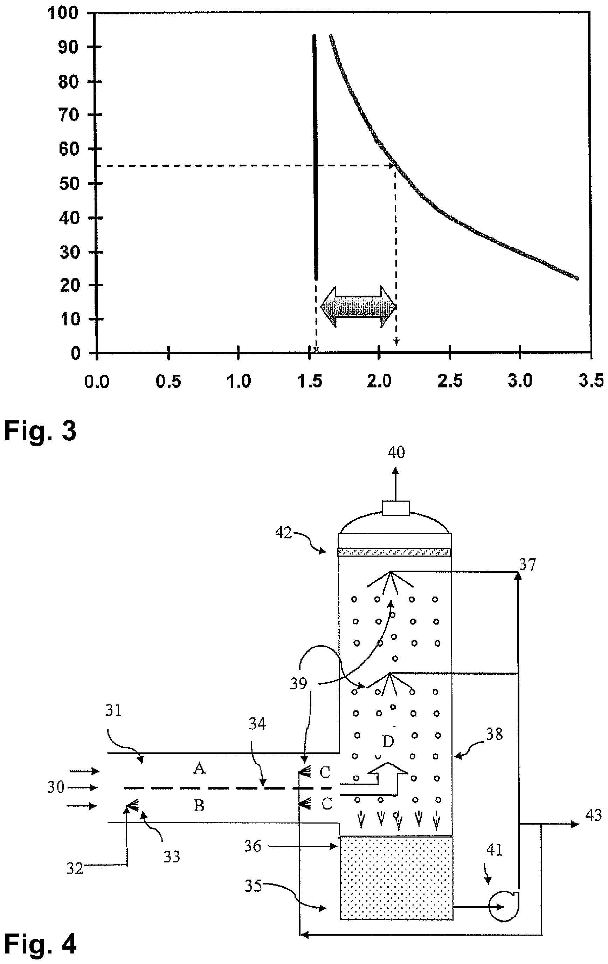

As indicated in Fig. 3 with the suggested inventive configuration, unit ozone (O₃) consumption per mole of nitrogen oxides (NO_{X}) removed remains almost identical (= left-hand graph in Fig. 3, as per the present invention, in comparison to the right-hand graph in Fig. 3, as per the prior art). The gas flow is 0.45 a[ctual]m³/s (950 acfm, with acfm being actual cubic feet per minute), the NO_{X} level is 250 ppm, the SO_{X} level is 750 ppm, and the temperature is 115.6 C (240°F).

As indicated by the double arrow in Fig. 3, the consumption of ozone is 35 percent less (, i. e. savings of 35 percent) in lowering 55 percent of the nitrogen oxides content compared with the prior art under identical conditions.

In addition to savings in the amount of ozone consumed, the present invention offers dry exhaust stack since a portion of the gas stream was not scrubbed and was thereby not saturated with water vapor. This eliminates any residual ozone and contains very low NO₂ content in the remaining nitrogen oxides. Since most of the nitrogen oxides absorbed is N₂O₅ only nitrate is formed in the scrubbing medium.

Turning to Fig. 4, flue gas is scrubbed in an existing vertical scrubber. The untreated gas stream 30 is conveyed through duct 31 to the wet spray scrubber 38. As per the present invention, the duct 31 is partitioned to treat a portion of the gas stream 30. The partition 34 divides duct 31 into two equal zones, A and B.

Ozone containing gas stream 32 is mixed with the portion of gas stream in zone B using nozzle 33. Contaminants, including nitrogen oxides are completely oxidized in the zone B prior to requiring aqueous medium sprays 39 in zone C. Oxidized contaminants from zone B such as N₂O₅ and HNO₃ are readily captured in aqueous sprays 39 in zone C.

The gas stream exiting from the zones A, B from both partitions are remixed in the bottom section of the scrubber 38. If required, the residence time requirement can be compensated for by using a slight excess of ozone 32. If the volume of the duct 31 (zones A and B) is insufficient or if the duct 31 cannot be partitioned, the bottom portion of the scrubber 38 may be partitioned to create zones A and B for oxidation. If sulphur oxides are also present, the internal arrangements in the scrubber 38 may be made necessary to avoid droplets from the spray section falling into the oxidation zone.

As depicted in Fig. 4, the scrubber 38 is sprayed with aqueous medium from the sump 35 via pump 41 through header spray assembly 37 and spray nozzles 39. Scrubbing medium sprayed in the gas stream removes remaining contaminants such as SO₂, HCl, etc.

The sump 35 is supplemented by aqueous stream(s) 36 which can be made up of water, reagents, etc. Part of the scrubbing medium may be continuously or intermittently purged by stream 43 to maintain dissolved and suspended solids within the operating range.

Nitrogen oxides scrubbing is insignificantly affected by pH in the range of 2 to 14 or the presence of dissolved or suspended solids content and therefore other parametric controls such as pH control and purge control are not detailed greatly here.

The scrubbed gas stream in the scrubber 38 then flows through the droplet separation device 42 and exits as stream 40.

In a typical limestone based wet flue gas desulphurization (FGD), scrubber sump 35 may also be fitted with an air sparger, not shown, to oxidize calcium sulfite to sulfate.

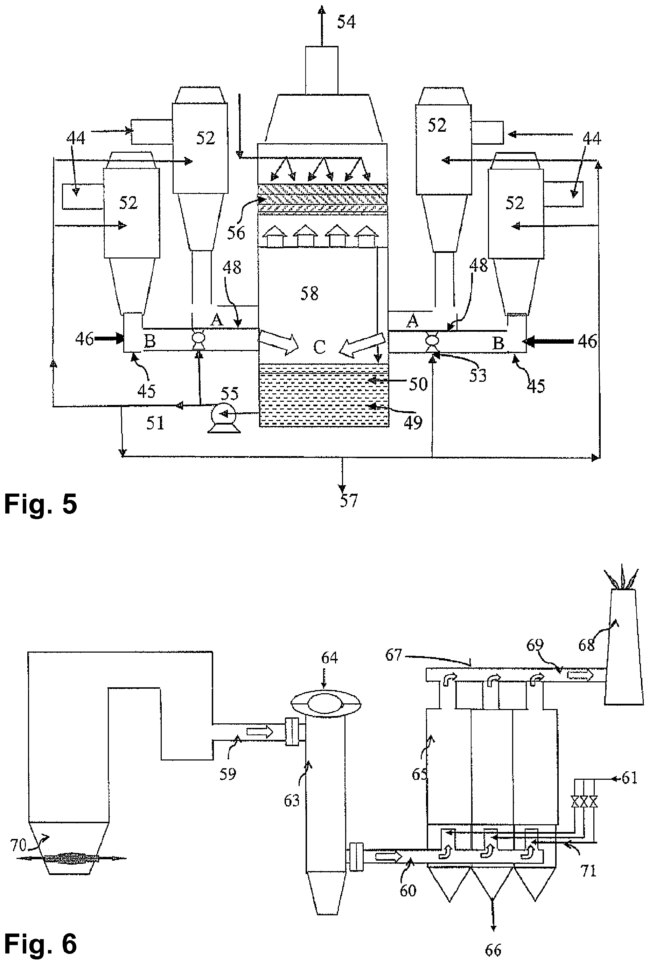

As depicted in Fig. 5, flue gas from a fluid catalytic cracking (FCC) off gas stream 44 is treated for up to fifty percent nitrogen oxides removal. The scrubbing apparatus 52 consists of four Venturis for gas-liquid contacting.

In this case the FCC off gas stream 44 is scrubbed in four Venturi scrubbers each designated 52 prior to admixing with ozone. The FCC off gas 44 is conveyed to the four Venturi scrubbers 52. The fluid gas stream(s) 44 are brought into contact with the scrubbing medium in the Venturis 52 to remove acid gas including sulphur oxides, HCl, etc. and particulate matter such as coke and catalyst fines present in the FCC off gas 44.

The output from the Venturi scrubbers 52 is discharged into the duct. Two of these ducts unite to form an elbow. Ozone is introduced and mixed by injection system 46 in one (<--> reference numeral 45) out of the two ducts forming an elbow. Only two (<--> reference numeral 45) out of four discharge ducts are fitted with an ozone injection system 46 to treat fifty percent of the flue gas stream 44. The partition 48 divides two ducts forming an elbow that conveys a gas stream to a disengagement drum 58.

As shown in Fig. 5, each elbow is divided into two zones A and B. Ozone containing gas stream 46 is mixed with the portion of gas stream in the duct 45 forming an oxidation zone called zone B which has a larger volume than zone A. Contaminants including nitrogen oxides are completely oxidized in zone B prior to reaching aqueous medium sprays 53 at the end of the elbow. Both elbows open into zone C of the disengagement drum 58.

Oxidized contaminants such as N₂O₅ and HNO₃ are readily captured in aqueous sprays 53. The gas streams exiting from the elbow are allowed to mix in zone C in the bottom section of the drum 58. If the residence time available in the duct 45 is insufficient, the bottom portion of the drum 58 may also be partitioned to continue oxidation in the drum 58 and nitrogen oxides allowed absorbing in the coalescing droplets in the mist eliminator 56.

The Venturi scrubbers 52 are supplied with an aqueous medium from the sump 49 via pump 55 through a header 51. The same medium is also routed to spray nozzles 53. Scrubbing medium sprayed into the gas stream also removes any remaining contaminants such as SO₂.

The sump 49 is also supplemented by aqueous stream(s) 50 which can be make up water, reagents, etc. and some medium may be continuously or intermittently purged by stream 57 to maintain dissolved and suspended solids within operating range.

Nitrogen oxides scrubbing is insignificantly affected by pH in the range of 2 to 14 or the presence of dissolved or suspended solids content and therefore other parametric controls such as pH control and purge control are not detailed greatly here.

The gas stream from the disengagement drum 58 flows through the tray and mist eliminator assembly 56 and exhausted to the atmosphere as treated gas stream 54.

Using the methods of the present invention enable lowering nitrogen oxides emissions from 35 parts per million to 45 parts per million to less than twenty parts per million by treating fifty percent of the gas stream 44.

In another example depicted in Fig. 6, a flue gas stream 59 arising from the combustion device 70 is scrubbed in spray dryer scrubber 63 with alkali or alkaline hydroxide, carbonate or bicarbonates or mixtures thereof in a spray 64 for the removal of contaminants except nitrogen oxides. Environmental regulated mandated lowering the nitrogen oxides by sixty percent to 65 percent in two steps.

In the spray dryer 63, a hot gas stream 59 is contacted with the aqueous reagent stream 64 to remove sulphur oxides, HCl, mercury and other contaminants. The aqueous reagent stream 64 due to heat in the gas stream 59 turns into finely dusted solids and these solids are carried with the exiting gas stream via duct 60 to a bag house 65 containing bags made of fabric filter. The bag house 65 is generally modular with multiple chambers.

As shown in Fig. 6, bag house 65 has three chambers. The ozone containing gas stream 61 is enabled through a manifold 71 to feed a flue gas stream entering any one or all of the three chambers depending upon nitrogen oxides content and removal required.

Assuming the flow of gas stream is distributed equally, adding a slight excess of ozone 61 in one chamber provides around 33 percent nitrogen oxides removal while adding ozone 61 in any two out of the three chambers will provide 66 percent nitrogen oxides removal. Oxidized nitrogen oxides are then adsorbed on solid reagent in the bag house 65.

Solids are retained inside the bags while the gas streams flow through the fabric filter medium. Solids retained and collected on the surface of bags eventually fall by pulsating flow and collected in the bottom section of the bag house 65. Solids are then periodically or continuously discharged as stream 66 for disposal.

All gas streams from the various chambers are reunited in the duct 67 forming a treated gas stream 69. On mixing the gas streams exiting various chambers in the duct 67, any residual ozone present is immediately consumed by the remaining nitrogen oxides in the treated gas stream 69 which is then vented to the atmosphere through stack 68.

Initially in the first stage, in order to meet the thirty percent emissions reduction, ozone is introduced only into one chamber of the bag house 65. At a later time, to meet the sixty percent to 65 percent reduction, gas streams in any two out of three chambers may be treated with a slight stoichiometric excess of ozone 61.

While the present invention has been described with respect to particular embodiments thereof, it is apparent that numerous other forms and modifications of the present invention will be obvious to those skilled in the art. The appended claims in the present invention generally should be construed to cover all such obvious forms and modifications which are within the true spirit and scope of the present invention.

### List of reference numerals

- 30: untreated gas stream, in particular flue gas stream or process gas stream (first embodiment; cf. Fig. 4)
- 31: duct (first embodiment; cf. Fig. 4)
- 32: ozone, in particular ozone containing gas stream (first embodiment; cf. Fig. 4)
- 33: nozzle (first embodiment; cf. Fig. 4)
- 34: partition of duct 31 (first embodiment; cf. Fig. 4)
- 35: sump (first embodiment; cf. Fig. 4)
- 36: aqueous stream for sump 35 (first embodiment; cf. Fig. 4)
- 37: header spray assembly (first embodiment; cf. Fig. 4)
- 38: capture device, in particular scrubbing apparatus, for example wet spray scrubber (first embodiment; cf. Fig. 4)
- 39: aqueous spray, in particular aqueous medium spray or aqueous reagent spray, for example spray nozzle (first embodiment; cf. Fig. 4)
- 40: treated gas stream (first embodiment; cf. Fig. 4)
- 41: pump (first embodiment; cf. Fig. 4)
- 42: droplet separation device (first embodiment; cf. Fig. 4)
- 43: stream (first embodiment; cf. Fig. 4)
- 44: untreated gas stream, in particular flue gas stream or process gas stream, for example fluid catalytic cracking (FCC) off gas stream (second embodiment; cf. Fig. 5)
- 45: duct (second embodiment; cf. Fig. 5)
- 46: ozone, in particular ozone containing gas stream (second embodiment; cf. Fig. 5)
- 48: partition (second embodiment; cf. Fig. 5)
- 49: sump (second embodiment; cf. Fig. 5)
- 50: aqueous stream for sump 49 (second embodiment; cf. Fig. 5)
- 51: header (second embodiment; cf. Fig. 5)
- 52: scrubbing apparatus, in particular pre-scrubbing apparatus, for example Venturi scrubber (second embodiment; cf. Fig. 5)
- 53: aqueous spray, in particular aqueous medium spray or aqueous reagent spray, for example spray nozzle (second embodiment; cf. Fig. 5)
- 54: treated gas stream (second embodiment; cf. Fig. 5)
- 55: pump (second embodiment; cf. Fig. 5)
- 56: tray and mist eliminator assembly (second embodiment; cf. Fig. 5)
- 57: stream (second embodiment; cf. Fig. 5)
- 58: capture device, in particular scrubbing apparatus, for example disengagement drum (second embodiment; cf. Fig. 5)
- 59: untreated gas stream, in particular flue gas stream or process gas stream (third embodiment; cf. Fig. 6)
- 60: duct (third embodiment; cf. Fig. 6)
- 61: ozone, in particular ozone containing gas stream (third embodiment; cf. Fig. 6)
- 63: scrubbing apparatus, in particular pre-scrubbing apparatus, for example spray dryer (third embodiment; cf. Fig. 6)
- 64: aqueous spray, in particular aqueous medium spray or aqueous reagent spray, for example spray nozzle (third embodiment; cf. Fig. 6)
- 65: capture device, in particular scrubbing apparatus, for example bag house (third embodiment; cf. Fig. 6)
- 66: stream of solids (third embodiment; cf. Fig. 6)
- 67: duct (third embodiment; cf. Fig. 6)
- 68: stack (third embodiment; cf. Fig. 6)
- 69: treated gas stream (third embodiment; cf. Fig. 6)
- 70: combustion device (third embodiment; cf. Fig. 6)
- 71: manifold (third embodiment; cf. Fig. 6)
- A: first zone of duct 31 (, 45)
- B: second zone, in particular oxidation zone, of duct 31, 45
- C: third zone of duct 31(, 45)

## Claims

1. A method for partially removing nitrogen oxides from a process gas stream (30; 44) comprising the steps:
[a] separating the process gas stream (30; 44) into two or more process gas streams, wherein at least one of the two or more process gas streams is to be treated for nitrogen oxides removal and the volume-based percentage of this at least one of the two or more process gas streams is equal to the amount of nitrogen oxides to be removed;
[b] adding or admixing ozone (32; 46) to at least one of the two or more process gas streams that is to be treated for nitrogen oxides removal, said ozone (32; 46) being added or admixed in an amount to oxidize the nitrogen oxides to forms beyond NO₂, in particular to N₂O₅;
[c] feeding the at least one of the two or more process gas streams that is treated for nitrogen oxides removal to a capture device (38; 58) being selected from the group consisting of wet scrubbing equipment.

2. The method according to claim 1, wherein the process gas stream (30; 44) is an exhaust gas stream arising from an industrial process, in particular from a chemical, metallurgical, partial or full combustion process and/or from a source selected from the group consisting of fixed sources, stationary sources and mobile sources.

3. The method according to claim 2, wherein the industrial process is selected from the group consisting of industrial boilers, power generation systems, and combustion processes.

4. The method according to at least one of claims 1 to 3, wherein the nitrogen oxides are selected from the group consisting of nitric oxide and nitrogen dioxide.

5. The method according to at least one of claims 1 to 4, wherein the portion of the process gas stream (30; 44) separated correlates, in particular directly correlates, to the amount of nitrogen oxides removed from the process gas stream (30; 44).

6. The method according to at least one of claims 1 to 5, further comprising, in particular before or after step [a], the step of conditioning or treating, in particular pre-treating, the process gas stream, in particular at least one of the two or more process gas streams.

7. The method according to claim 6, wherein said conditioning or treating is selected from the group consisting of cooling, quenching, pre-scrubbing (52) and selective scrubbing.

8. The method according to at least one of claims 1 to 7, wherein said adding or admixing is selected from the group consisting of feeding ozone (32; 46) to, in particular injecting ozone (32; 46) into, the at least one of the two or more process gas streams.

9. The method according to at least one of claims 1 to 8, wherein oxidized nitrogen oxides are captured in the capture device (38; 58) by means of aqueous spray (39; 53), in particular by means of aqueous medium spray or by means of aqueous reagent spray.

10. The method according to at least one of claims 1 to 9, further comprising, in particular after step [c], the step of recombining the at least one of the two or more gas streams substantially free from nitrogen oxides with the remainder of said process gas stream, in particular in the capture device (38; 58) or downstream of the capture device (38; 58).

11. The method according to at least one of claims 1 to 10, further comprising, in particular after step [c], the step of releasing the, in particular recombined, process gas stream (40; 54).

## Patentansprüche

1. Verfahren zum teilweise Entfernen von Stickoxiden aus einem Prozessgasstrom (30; 44), umfassend die Schritte:
[a] Trennen des Prozessgasstroms (30; 44) in zwei oder mehrere Prozessgasströme, wobei mindestens einer der zwei oder mehreren Prozessgasströme zum Entfernen von Stickoxiden behandelt werden muss und der volumenbasierte Prozentsatz dieses mindestens einen der zwei oder mehreren Prozessgasströme der Menge der zu entfernenden Stickoxide entspricht;
[b] Zugeben oder Beimischen von Ozon (32; 46) zu mindestens einem der zwei oder mehreren Prozessgasströme, die zur Entfernung von Stickoxiden behandelt werden, wobei das Ozon (32; 46) in einer Menge zugegeben oder beigemischt wird, um die Stickoxide zu Formen über NO₂ hinaus zu oxidieren, insbesondere zu N₂O₅;
[c] Einleiten des mindestens einen der zwei oder mehreren Prozessgasströme, die zur Entfernung von Stickoxiden behandelt werden, zu einer Erfassungsvorrichtung (38; 58), die ausgewählt ist aus der Gruppe, bestehend aus einem Nasswäschegerät.

2. Verfahren nach Anspruch 1, wobei der Prozessgasstrom (30; 44) ein Abgasstrom ist, der in einem Industrieprozess entsteht, insbesondere in einem chemischen, metallurgischen, teilweise oder vollen Verbrennungsprozess und/oder durch eine Quelle entsteht, die ausgewählt ist aus der Gruppe, bestehend aus feststehenden Quellen, stationären Quellen und mobilen Quellen.

3. Verfahren nach Anspruch 2, wobei der Industrieprozess ausgewählt ist aus der Gruppe, bestehend aus Industriekesseln, Energieerzeugungssystemen und Verbrennungsprozessen.

4. Verfahren nach einem der Ansprüche 1 bis 3, wobei die Stickoxide ausgewählt sind aus der Gruppe, bestehend aus Nitridoxid und Stickdioxid.

5. Verfahren nach einem der Ansprüche 1 bis 4, wobei der Anteil des Prozessgasstroms (30; 44), der abgetrennt wird, mit der Menge der Stickoxide, insbesondere direkt damit, übereinstimmt, die aus dem Prozessgasstrom (30; 44) entfernt werden.

6. Verfahren nach einem der Ansprüche 1 bis 5, ferner umfassend, insbesondere vor oder nach Schritt [a], Konditionieren oder Behandeln, insbesondere Vorbehandeln des Prozessgasstroms, insbesondere mindestens eines der zwei oder mehreren Prozessgasströme.

7. Verfahren nach Anspruch 6, wobei das Konditionieren oder Behandeln ausgewählt ist aus der Gruppe, bestehend aus Kühlung, Abschrecken, Vornasswäsche (52) und selektive Nasswäsche.

8. Verfahren nach einem der Ansprüche 1 bis 7, wobei das Zugeben oder Beimischen ausgewählt ist aus der Gruppe, bestehend aus dem Zuführen von Ozon (32; 46) zu oder insbesondere dem Einspritzen von Ozon (32; 46) in mindestens einen der zwei oder mehreren Prozessgasströme.

9. Verfahren nach einem der Ansprüche 1 bis 8, wobei die oxidierten Stickoxide in der Erfassungsvorrichtung (38; 58) mittels eines wässrigen Sprays (39; 53) erfasst werden, insbesondere durch Mittel eines wässrigen Mediumsprays oder mittels eines wässrigen Reagenzsprays.

10. Verfahren nach einem der Ansprüche 1 bis 9, ferner umfassend, insbesondere nach Schritt [c], erneutes Mischen des mindestens einen der zwei oder mehreren Prozessgasströme, die im Wesentlichen frei von Stickoxiden sind, mit dem Rest des Prozessgasstroms, insbesondere in der Erfassungsvorrichtung (38; 58) oder stromabwärts der Erfassungsvorrichtung (38; 58).

11. Verfahren nach einem der Ansprüche 1 bis 10, weiter umfassend, insbesondere nach Schritt [c], Freisetzen des insbesondere neu vermischten Prozessgasstroms (40; 54).

## Revendications

1. Procédé pour l'élimination partielle d'oxydes d'azote d'un flux de gaz de procédé (30 ; 44) comprenant les étapes :
[a] séparation du flux de gaz de procédé (30 ; 44) en deux ou plus de deux flux de gaz de procédé, au moins l'un des deux ou plus de deux flux de gaz de procédé devant être traité pour l'élimination des oxydes d'azote et le pourcentage sur la base du volume de cet au moins un des deux ou plus de deux flux de gaz de procédé étant égal à la quantité d'oxydes d'azote à éliminer ;
[b] ajout ou mélange d'ozone (32 ; 46) à au moins l'un des deux ou plus de deux flux de gaz de procédé qui doit être traité pour l'élimination des oxydes d'azote, ledit ozone (32 ; 46) étant ajouté ou mélangé en une quantité pour oxyder les oxydes d'azote en des formes au-delà de NO₂, en particulier en N₂O₅ ;
[c] introduction de l'au au moins un des deux ou plus de deux flux de gaz de procédé qui est traité pour l'élimination des oxydes d'azote dans un dispositif de capture (38 ; 58) qui est choisi dans le groupe constitué par un appareillage de lavage en voie humide.

2. Procédé selon la revendication 1, dans lequel le flux de gaz de procédé (30 ; 44) est un flux de gaz effluent provenant d'un procédé industriel, en particulier provenant d'un procédé chimique, métallurgique ou de combustion partielle ou totale et/ou provenant d'une source choisie dans le groupe constitué par les sources fixes, les sources stationnaires et les sources mobiles.

3. Procédé selon la revendication 2, dans lequel le procédé industriel est choisi dans le groupe constitué par les chaudières industrielles, les systèmes de production d'énergie et les procédés de combustion.

4. Procédé selon au moins l'une des revendications 1 à 3, dans lequel les oxydes d'azote sont choisis dans le groupe constitué par l'oxyde nitrique et le dioxyde d'azote.

5. Procédé selon au moins l'une des revendications 1 à 4, dans lequel la portion du flux de gaz de procédé (30 ; 44) séparée est corrélée, en particulier est directement corrélée, à la quantité d'oxydes d'azote éliminés du flux de gaz de procédé (30 ; 44).

6. Procédé selon au moins l'une des revendications 1 à 5, comprenant en outre, en particulier avant ou après l'étape [a], l'étape de conditionnement ou de traitement, en particulier de prétraitement, du flux de gaz de procédé, en particulier d'au moins l'un des deux ou plus de deux flux de gaz de procédé.

7. Procédé selon la revendication 6, dans lequel ledit conditionnement ou traitement est choisi dans le groupe constitué par un refroidissement, une extinction, un prélavage (52) et un lavage sélectif.

8. Procédé selon au moins l'une des revendications 1 à 7, dans lequel ledit ajout ou mélange est choisi dans le groupe constitué par l'introduction d'ozone (32 ; 46), en particulier l'injection d'ozone (32 ; 46), dans l'au moins un des deux ou plus de deux flux de gaz de procédé.

9. Procédé selon au moins l'une des revendications 1 à 8, dans lequel les oxydes d'azote oxydés sont capturés dans le dispositif de capture (38 ; 58) au moyen d'un jet pulvérisé aqueux (39 ; 53), en particulier au moyen d'un jet pulvérisé de milieu aqueux ou au moyen d'un jet pulvérisé de réactif aqueux.

10. Procédé selon au moins l'une des revendications 1 à 9, comprenant en outre, en particulier après l'étape [c], l'étape de recombinaison de l'au moins un des deux ou plus de deux flux de gaz pratiquement exempt d'oxydes d'azote avec le reste dudit flux de gaz de procédé, en particulier dans le dispositif de capture (38 ; 58) ou en aval du dispositif de capture (38 ; 58).

11. Procédé selon au moins l'une des revendications 1 à 10, comprenant en outre, en particulier après l'étape [c], l'étape de rejet du flux de gaz de procédé (40 ; 54), en particulier recombiné.
